# EUROPEAN PATENT SPECIFICATION

(11) **EP 4 499 502 B1**
(45) Date of publication and mention of the grant of the patent: **17.12.2025**
(21) Application number: 23727706.6
(22) Date of filing: 28.03.2023
(51) Int. Cl.: B64C 27/00, B64D 45/00

(54) **A WIRE CUTTER SYSTEM**
DRAHTSCHNEIDESYSTEM
SYSTÈME DE COUPE DE FIL

(30) Priority: 31.03.2022 TR 202205071
(43) Date of publication of application: 05.02.2025
(73) Proprietor: Tusas- Turk Havacilik Ve Uzay Sanayii Anonim Sirketi, 06980 Ankara (TR)
(72) Inventor: METHIBAY, Hayriye Ezgi, 06980 Ankara (TR); SAHIN, Burhan, 06980 Ankara (TR)
(74) Representative: Berkkam, Ayfer
(86) International application number: PCT/TR2023/050293
(87) International publication number: WO 2023/191752

(56) References cited:
- WO-A1-95/07214
- CN-A- 109 533 360
- US-A- 4 826 103
- US-A- 5 286 170

## Description

The present invention relates to a wire cutter system developed to prevent an air vehicle from being damaged by obstacles hit during a flight.

When an air vehicle, such as a helicopter used for civil or military purposes and flying at low altitudes, hits against obstacles such as hardly-visible electrical wires or telephone cables during flight, accidents may occur, resulting in an air vehicle crash. Wire cutter systems are provided on air vehicles to reduce the risk of obstacles, such as electrical wires or telephone cables, hitting and damaging the air vehicle. Wire cutters are designed individually for each air vehicle, which can be placed in different positions on the air vehicle, have high strength during a cable or wire cutting process, and have a minimal aerodynamic impact.

CN109533360A, which is included in the known-state of the art, discloses a telescopic wire cutter. Said wire cutter comprises a mounting bracket having a first angle guiding port and a second angle mounting port. Said mounting bracket is mounted under the helicopter fuselage. In addition to the bracket, the wire cutter comprises a cutting blade and several guiding pieces. The guiding pieces are structured telescopically, and open during the flight of the helicopter to cut the wire or cable.

KR10204299081, which is included in the known-state of the art, discloses a wire cutting device mounted on a landing gear of a helicopter and moving with the landing gear, wherein if the helicopter is caught in a cable, such as a power cable, during landing, the wire cutting device cuts the cable to deploy the landing gears.

US5286170A, which is included in the known-state of the art, discloses a wire cutting apparatus for helicopters. Specifically, it addresses systems that protect helicopters from potentially dangerous wire strikes by providing cutting mechanisms between the rotor and the fuselage. These mechanisms, which include pitch control rods with cutting edges and rotating drum assemblies, are designed to intercept and sever wires that might become entangled in the rotor, preventing crashes. The described systems work by directing the wire toward the midpoint of the cutting apparatus, either through helically twisted control rods or cutting blades on a drum, ensuring that the wire is cut before it can damage the helicopter.

A wire cutter system according to the present invention prevents the air vehicle from being damaged by cutting a wire when the air vehicle is caught in obstacles such as cables or wires. Moreover, since the wire cutter can move in and out of the body, when the air vehicle is positioned on the ground, wings of the air vehicle and the wire cutter are prevented from hitting each other in case the wings are bent due to weight or atmospheric conditions.

The wire cutter system according to claim 1 is realized to achieve the object of the present invention, which is illustrated in the first claim and other claims dependent thereon, and comprises a body on the air vehicle; at least one rotor on the body, which allows the body to take off and move; at least one wire cutter which allows various obstacles such as electrical wires, telephone cables that the air vehicle hits during a flight to be cut before damaging the air vehicle.

The wire cutter system according to the invention comprises a first position (I) in which the wire cutter is triggered by the rotation of the rotor around its own axis, such that the wire cutter extends outward from the body and cuts the obstacles such as cables contained in the flight direction of the air vehicle; a second position (II) in which the wire cutter is retracted into the body from the first position (I) and does not extend outward from the body; at least one actuator that enables the wire cutter to move from the first position (I) to the second position (II) or from the second position (II) to the first position (I).

In the invention, the wire cutter system comprises the first position (I) ir which the wire cutter extends outward from the body if the rotational speed of the rotor around its own axis is higher than a reference value determined by the manufacturer; a second position in which the wire cutter is moved from the first position (I) into the body if the rotational speed of the rotor around its own axis is lower than the reference value determined by the manufacturer.

In an embodiment of the invention, the wire cutter system comprises at least one sensor on the body, which reads the data on the rotational speed of the rotor around its own axis; a control unit which receives data from the sensor to compare the data read by the sensor with the reference value determined by the manufacturer; the control unit that triggers the actuator to move the wire cutter to the first position (I) or the second position (II) according to the rotor speed and the reference value.

In an embodiment of the invention, the wire cutter system comprises a pulley on the body; a belt that moves the pulley and provides the connection between rotor and pulley; a first chamber containing liquid or gas; the actuator movably located on the pulley; a second chamber in which a lower surface of the wire cutter is movably located; a conveying line that allows the fluid in the first chamber to be transported into the second chamber; the actuator, which moves into the first chamber on the pulley with the rotational speed of the rotor, thus applying force to the lower surface of the wire cutter by fluids carried into the second chamber, allowing the wire cutter to move from the second position (II) to the first position (I).

In an embodiment of the invention, the wire cutter system comprises the actuator that enables the wire cutter to move to the first position (I) or the second position (II) when the pilot provides an input to the control unit.

In an embodiment of the invention, the wire cutter system comprises the actuator rotating around an axis where the wire cutter extends to the wings, thus moving the wire cutter from the first position (I) to the second position (II) or from the second position (II) to the first position (I).

In an embodiment of the invention, the wire cutter system comprises the body located on a rotary wing air vehicle; at least one body surface located on the body and facing with the wings; the wire cutter extending from the body surface to the wings in the first position (I).

In an embodiment of the invention, the wire cutter system comprises a connector which enables the wire cutter to be rotatably attached to the body and to rotate from the first position (I) to the second position (II) or from the second position (II) to the first position (I) around the connection point on the body.

In an embodiment of the invention, the wire cutter system comprises an outer surface located on the wire cutter and complementary to the body surface so that it does not protrude from the wire cutter body surface when the wire cutter is in the second position (II).

In an embodiment of the invention, the wire cutter system comprises the wire cutter located between the body and the landing gears.

In an embodiment of the invention, the wire cutter system comprises the wire cutter extending from the body to the landing gears.

In an embodiment of the invention, the wire cutter system comprises the actuator which is an electric motor.

In an embodiment of the invention, the wire cutter system comprises the body located on the helicopter.

In an embodiment of the invention, the wire cutter system comprises a deflector on the body, which is triggered by the actuator to guide the cables moved to the first position (I) or the second position (II) on the body without cutting the cables.

All the parts illustrated in figures are individually assigned a reference numeral and the corresponding terms of these numbers are listed below:
A wire cutter system realized to achieve the object of the present invention is illustrated in the attached drawings, in which:
Figure 1 is a side view of the wire cutter in the first position (I).
Figure 2 is a side view of the wire cutter in the second position (II).
Figure 3 is a side view of the belt, pulley, conveying system, first chamber and second chamber.
Figure 4 is a side view of the wire cutter, body surface and connector.
Figure 5 is a side view of the body.
Figure 6 is a perspective view of the wire cutter.

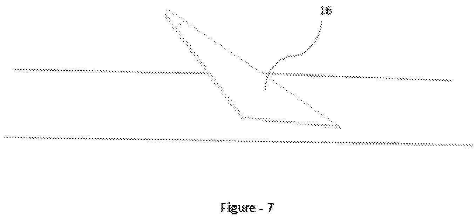

Figure 7 is a side view of the deflector.

All the parts illustrated in figures are individually assigned a reference numeral and the corresponding terms of these numbers are listed below:
1. Wire Cutter System
2. Body
3. Rotor
4. Wire Cutter
5. Actuator
6. Sensor
7. Control Unit
8. Pulley
9. Belt
10. First Chamber
11. Second Chamber
12. Conveying Line
13. Body Surface
14. Connector
15. Outer Surface
16. Deflector
(I) First Position
(II) Second Position
(S) Lower Surface

The wire cutter system (1) comprises a body (2) which is an air vehicle; at least one rotor (3) on the body (2), which allows the body (2) to move; at least one wire cutter on the body (2), which cuts various obstacles such as electrical wires or telephone cables contacting the body (2) while moving, and thus prevents the body (2) from getting damaged.

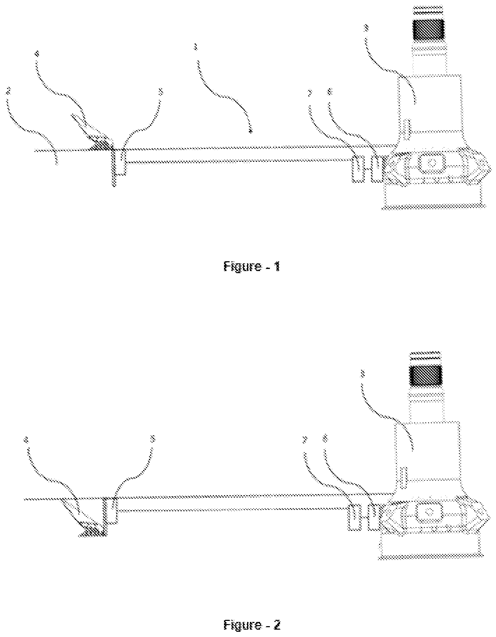

The wire cutter system (1) according to the invention comprises a first position (I) in which the wire cutter (4) is triggered by the rotation of the rotor (3) around its own axis, such that the wire cutter (4) extends outward from the body (2) and cuts the obstacles contacting the body (2); a second position (II) in which the wire cutter (4) is moved from the first position (I) by the rotation of the rotor (3) around its own axis, and kept in the body (2); at least one actuator (5) that provides the movement of the wire cutter (4) from the first position (I) to the second position (II) and from the second position (II) to the first position (I) (Figure 1, Figure 2, Figure 6).

Hardly-visible obstacles such as cables or wires, which are not noticed by the user during the movement of the body (2), cause the air vehicle to crash. By means of the wire cutter (4) positioned on the body (2), cables and wires are cut before damaging the body (2). In this way, the flight safety of the air vehicle is enhanced.

Since the wire cutter (4) is provided on the body (2) so as to be movable from the first position (I) to the second position (II), the air vehicle wings are prevented from colliding with the wire cutter (4) as a result of bending due to atmospheric conditions or weight. As the movement of the wire cutter (4) from the second position (II) to the first position (I) depends on the rotational speed of the rotor (3), the wire cutter (4) is enabled to extend out of the body (2) only during the flight of the air vehicle.

In the invention, the wire cutter system (1) comprises the first position (I) in which the wire cutter (4) extends outward from the body (2) to cut the obstacles contacting the wire cutter (4) when the rotational speed of the rotor (3) is higher than a value predetermined by the manufacturer; the second position (II) in which the wire cutter (4) is moved from the first position (I) and kept in the body (2) if the rotational speed of the rotor (3) is lower than the value predetermined by the manufacturer. When the rotational speed of the rotor (3) is above the value determined by the manufacturer, the air vehicle wings bend less. Since the wire cutter (4) is in the first position (I) on the body (2) only when the rotational speed of the rotor (3) determined by the manufacturer is exceeded, it can extend over the body (2) to a closer distance to the wings in the first position (I). In this way, the body (2) can be further protected against obstacles.

In an embodiment of the invention, the wire cutter system (1) comprises at least one sensor (6) on the body (2), which obtains the data on the rotational speed of the rotor (3); a control unit (7) which compares the data received from the sensor (6) with the rotational speed of the rotor (3) determined by the manufacturer, and which, according to the rotational speed of the rotor (3) determined by the manufacturer, triggers the actuator (5) to move the wire cutter (4) from the first position (I) to the second position (II) or from the second position (II) to the first position (I). As a result that the control unit (7) processes and compares the data transmitted by the sensor (6) with the rotational speed of the rotor (3) determined by the manufacturer, the wire cutter (4) can move automatically from the first position (I) to the second position (II) or from the second position (II) to the first position (I) (Figure 1, Figure 2).

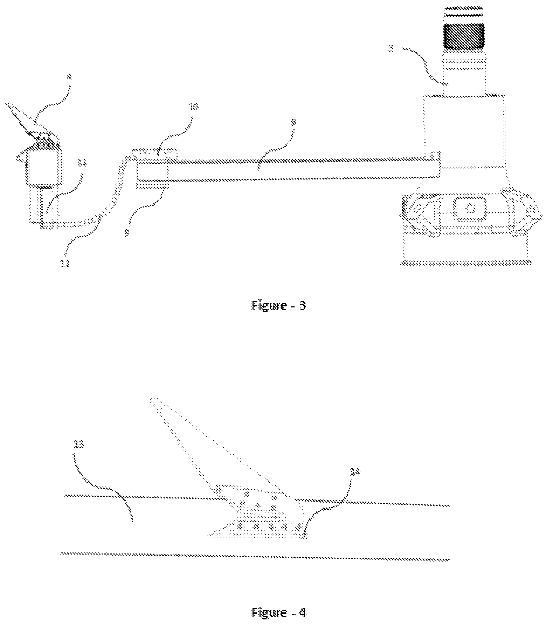

In an embodiment of the invention, the wire cutter system (1) comprises a pulley (8) on the body (2); a belt (9) that transfers the rotational movement of the rotor (3) to the pulley (8); a first chamber (10) containing a fluid; the actuator (5) which is located on the pulley (8) and moves into the first chamber (10) with the centrifugal force created by the rotational movement of the pulley (8); a second chamber (11) that allows application of force to a lower surface (S) of the wire cutter (4) by means of the fluids contained therein; a conveying line (12) that allows the wire cutter (4) to move from the second position (II) to the first position (I) by carrying fluid from the first chamber (10) to the second chamber (11) by means of the actuator (5) moving into the first chamber (10). Thanks to the belt (9) and pulley (8) system provided on the body (2) and triggered by the rotor (3), the rotational speed of the rotor (3) is transmitted mechanically to the actuator (5), and thus the wire cutter (4) can be activated without using electronic systems (Figure 3).

In an embodiment of the invention, the wire cutter system (1) comprises the body (2) which is a rotary wing air vehicle; at least one body surface (13) where the body (2) is opposite to the wings; the wire cutter (4) extending from the body surface (13) to the wings in the first position (I). Therefore, it is ensured that the wings on the body (2) continue to operate without being damaged by obstacles during flight (Figure 4).

In an embodiment of the invention, the wire cutter system (1) comprises a connector (14) which enables the wire cutter (4) to be movably attached to the body (2); the wire cutter (4) that moves from the first position (I) to the second position (II) or from the second position (II) to the first position (I) by rotating around the connector (14) (Figure 4).

In an embodiment of the invention, the wire cutter system (1) comprises the control unit (7) that enables the wire cutter (4) to move to the first position (I) or the second position (II) by triggering the actuator (5) with the input provided by the user. Therefore, the wire cutter (4) can be moved depending on the user's request.

In an embodiment of the invention, the wire cutter system (1) comprises the wire cutter (4) that is moved from the first position (I) to the second position (II) or from the second position (II) to the first position (I) by rotating around its own axis by means of the actuator (5).

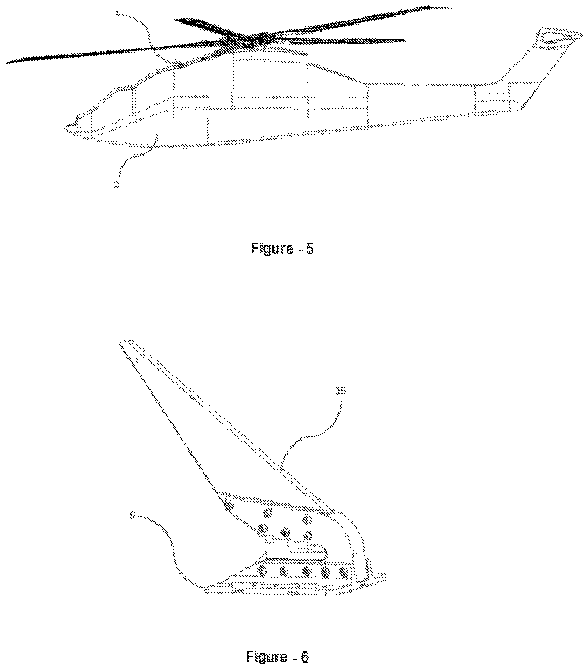

In an embodiment of the invention, the wire cutter system (1) comprises an outer surface (15) on the wire cutter (4), which remains congruent with the body surface (13) when the wire cutter (4) is in the second position (II). Since the outer surface (15) remains congruent with the body surface (13), the wire cutter (4) is enabled to form a more aerodynamic surface in the second position (II) without protruding on the body (2) (Figure 6).

In an embodiment of the invention, the wire cutter system (1) comprises the wire cutter (4) located between the body (2) and the landing gears. In an embodiment of the invention, the wire cutter system (1) comprises the actuator (5), which is an electric motor.

In an embodiment of the invention, the wire cutter system (1) comprises the body (2), which is a helicopter.

In an embodiment of the invention, the wire cutter system (1) comprises a deflector (16) on the body (2), which is triggered by the actuator (5) to guide the cables moved to the first position (I) or the second position (II) on the body (2) without cutting the cables. In this way, the cables can be guided to the wire cutters (4) without being stuck on the body (2).

## Claims

1. A wire cutter system (1) comprising a body (2) which is an air vehicle; at least one rotor (3) on the body (2), which allows the body (2) to move; at least one wire cutter on the body (2), which cuts various obstacles such as electrical wires or telephone cables contacting the body (2) while moving, and thus prevents the body (2) from getting damaged, comprising a first position (I) in which the wire cutter (4) is triggered by the rotation of the rotor (3) around its own axis, such that the wire cutter (4) extends outward from the body (2) and cuts the obstacles contacting the body (2); **characterized by** a second position (II) in which the wire cutter (4) is moved from the first position (I) by the rotation of the rotor (3) around its own axis, and kept in the body (2); at least one actuator (5) that provides the movement of the wire cutter (4) from the first position (I) to the second position (II) and from the second position (II) to the first position (I), wherein in the first position (I) the wire cutter (4) extends outward from the body (2) to cut the obstacles contacting the wire cutter (4) when the rotational speed of the rotor (3) is higher than a value predetermined by the manufacturer; in the second position (II) the wire cutter (4) is moved from the first position (I) and kept in the body (2) if the rotational speed of the rotor (3) is lower than the value predetermined by the manufacturer.

2. A wire cutter system (1) according to claim 1 **characterized by** at least one sensor (6) on the body (2), which obtains the data on the rotational speed of the rotor (3); a control unit (7) which compares the data received from the sensor (6) with the rotational speed of the rotor (3) determined by the manufacturer, and which, according to the rotational speed of the rotor (3) determined by the manufacturer, triggers the actuator (5) to move the wire cutter (4) from the first position (I) to the second position (II) or from the second position (II) to the first position (I).

3. A wire cutter system (1) according to claim 1, **characterized by** a pulley (8) on the body (2); a belt (9) that transfers the rotational movement of the rotor (3) to the pulley (8); a first chamber (10) containing a fluid; the actuator (5) which is located on the pulley (8) and moves into the first chamber (10) with the centrifugal force created by the rotational movement of the pulley (8); a second chamber (11) that allows application of force to a lower surface (S) of the wire cutter (4) by means of the fluids contained therein; a conveying line (12) that allows the wire cutter (4) to move from the second position (II) to the first position (I) by carrying fluid from the first chamber (10) to the second chamber (11) by means of the actuator (5) moving into the first chamber (10).

4. A wire cutter system (1) according to any of the above claims, **characterized by** the body (2) which is a rotary wing air vehicle; at least one body surface (13) where the body (2) is opposite to the wings; the wire cutter (4) extending from the body surface (13) to the wings in the first position (I).

5. A wire cutter system (1) according to any of the above claims, **characterized by** a connector (14) which enables the wire cutter (4) to be movably attached to the body (2); the wire cutter (4) that moves from the first position (I) to the second position (II) or from the second position (II) to the first position (I) by rotating around the connector (14).

6. A wire cutter system (1) according to claim 2, **characterized by** the control unit (7) that enables the wire cutter (4) to move to the first position (I) or the second position (II) by triggering the actuator (5) with the input provided by the user.

7. A wire cutter system (1) according to any of the above claims, **characterized by** the wire cutter (4) that is moved from the first position (I) to the second position (II) or from the second position (II) to the first position (I) by rotating around its own axis by means of the actuator (5).

8. A wire cutter system (1) according to claims 4 to 7, **characterized by** an outer surface (15) on the wire cutter (4), which remains congruent with the body surface (13) when the wire cutter (4) is in the second position (II).

9. A wire cutter system (1) according to any of the above claims, **characterized by** the wire cutter (4) located between the body (2) and the landing gears.

10. A wire cutter system (1) according to claims 1 to 2, **characterized by** the actuator (5), which is an electric motor.

11. A wire cutter system (1) according to any of the above claims, **characterized by** the body (2), which is a helicopter.

12. A wire cutter system (1) according to any of the above claims, **characterized by** a deflector (16) on the body (2), which is triggered by the actuator (5) to guide the cables moved to the first position (I) or the second position (II) on the body (2) without cutting the cables.

## Patentansprüche

1. Ein Drahtschneidesystem (1) umfasst einen Rumpf (2), der ein Luftfahrzeug ist; mindestens einen Rotor (3) am Rumpf (2), der die Bewegung des Rumpfs (2) ermöglicht; mindestens eine Drahtschneidevorrichtung am Rumpf (2), die verschiedene Hindernisse wie elektrische Leitungen oder Telefonkabel, die den Rumpf (2) während der Bewegung berühren, durchschneidet und so eine Beschädigung des Rumpfs (2) verhindert, eine erste Position (I) beinhaltet, in der die Drahtschneidevorrichtung (4) durch die Drehung des Rotors (3) um seine eigene Achse ausgelöst wird, sodass die Drahtschneidevorrichtung (4) aus dem Rumpf (2) herausragt und die Hindernisse, die den Rumpf (2) berühren, durchschneidet; **gekennzeichnet durch**
eine zweite Position (II), in der die Drahtschneidevorrichtung (4) durch die Drehung des Rotors (3) um seine eigene Achse aus der ersten Position (I) bewegt und im Rumpf (2) gehalten wird; mindestens ein Aktuator (5), der die Bewegung der Drahtschneidevorrichtung (4) von der ersten Position (I) in die zweite Position (II) und von der zweiten Position (II) in die erste Position (I) ermöglicht, worin
**in der ersten Position (I)**
Drahtschneidevorrichtung (4) aus dem Rumpf (2) ausfährt, um die mit der Drahtschneidevorrichtung (4) in Kontakt stehenden Hindernisse zu durchtrennen, wenn die Drehzahl des Rotors (3) höher als ein vom Hersteller vorgegebener Wert ist; in der zweiten Position (II) wird der Drahtschneidevorrichtung (4) aus der ersten Position (I) bewegt und im Rumpf (2) gehalten, wenn die Drehzahl des Rotors (3) niedriger als der vom Hersteller vorgegebene Wert ist.

2. Ein Drahtschneidesystem (1) nach Anspruch 1, **gekennzeichnet durch** mindestens einen Sensor (6) am Rumpf (2), der die Daten zur Drehzahl des Rotors (3) erfasst; eine Steuereinheit (7), die die vom Sensor (6) empfangenen Daten mit der vom Hersteller ermittelten Drehzahl des Rotors (3) vergleicht und die entsprechend der vom Hersteller ermittelten Drehzahl des Rotors (3) den Aktuator (5) auslöst, um die Drahtschneidevorrichtung (4) von der ersten Position (I) in die zweite Position (II) oder von der zweiten Position (II) in die erste Position (I) zu bewegen.

3. Ein Drahtschneidesystem (1) nach Anspruch 1, **gekennzeichnet durch** eine Riemenscheibe (8) am Rumpf (2); einen Riemen (9), der die Drehbewegung des Rotors (3) auf die Riemenscheibe (8) überträgt; eine erste Kammer (10), die eine Flüssigkeit enthält; den Aktuator (5), der sich auf der Riemenscheibe (8) befindet und sich durch die Drehbewegung der Riemenscheibe (8) erzeugte Zentrifugalkraft in die erste Kammer (10) bewegt; eine zweite Kammer(11), die die Krafteinwirkung auf eine Unterseite (S) der Drahtschneidevorrichtung (4) mittels der darin enthaltenen Flüssigkeit ermöglicht; eine Förderleitung (12), die die Bewegung der Drahtschneidevorrichtung (4) von der zweiten Position (II) in die erste Position (I) ermöglicht, indem sie Flüssigkeit von der ersten Kammer (10) in die zweite Kammer (11) befördert, wobei sich der Aktuator (5) in die erste Kammer (10) bewegt.

4. Ein Drahtschneidesystem (1) nach einem der oben genannten Ansprüche, **gekennzeichnet durch** den Rumpf (2), der ein Drehflügler ist; mindestens eine Rumpfoberfläche (13), an der der Rumpf (2) den Rotorblättern gegenüberliegt; der Drahtschneidevorrichtung (4), der sich in der ersten Position (I) von der Rumpfoberfläche (13) bis zu den Rotorblättern erstreckt.

5. Ein Drahtschneidesystem (1) nach einem der oben genannten Ansprüche, **gekennzeichnet durch** einen Verbindungselement (14), der eine bewegliche Befestigung des Drahtschneidevorrichtung (4) am Rumpf (2) ermöglicht; der Drahtschneidevorrichtung (4) bewegt sich durch Drehung um das Verbindungselement (14) von der ersten Position (I) in die zweite Position (II) oder von der zweiten Position (II) in die erste Position (I).

6. Ein Drahtschneidesystem (1) nach Anspruch 2, **gekennzeichnet durch** die Steuereinheit (7), die es die Drahtschneidevorrichtung (4) ermöglicht, durch Auslösen des Aktuators (5) mit der Eingabe des Benutzers in die erste Position (I) oder die zweite Position (II) zu fahren.

7. Ein Drahtschneidesystem (1) nach einem der oben genannten Ansprüche, **gekennzeichnet durch** die Drahtschneidevorrichtung (4), der durch Drehung um die eigene Achse mittels des Aktuators (5) von der ersten Position (I) in die zweite Position (II) oder von der zweiten Position (II) in die erste Position (I) bewegt wird.

8. Ein Drahtschneidesystem (1) gemäß den Ansprüchen 4 bis 7, **gekennzeichnet durch** eine Außenfläche (15) auf die Drahtschneidevorrichtung (4), die in der zweiten Position (II) die Drahtschneidevorrichtung (4) mit der Rumpfoberfläche (13) deckungsgleich bleibt.

9. Drahtschneidesystem (1) nach einem der oben genannten Ansprüche, **gekennzeichnet durch** die Drahtschneidevorrichtung (4), der sich zwischen dem Rumpf (2) und dem Fahrwerk befindet.

10. Ein Drahtschneidesystem (1) nach Anspruch 1 bis 2, **gekennzeichnet durch** den Aktuator (5), der ein Elektromotor ist.

11. Ein Drahtschneidesystem (1) nach einem der oben genannten Ansprüche, **gekennzeichnet durch** den Rumpf (2), der ein Hubschrauber ist.

12. Ein Drahtschneidesystem (1) nach einem der oben genannten Ansprüche, **gekennzeichnet durch** einen Abweiser (16) am Rumpf (2), der durch den Aktuator (5) ausgelöst wird, um die in die erste Position (I) oder die zweite Position (II) am Rumpf (2) bewegten Kabel zu führen, ohne die Kabel zu durchtrennen.

## Revendications

1. Système de coupe-fil (1) comprenant un corps (2) constitué d'un véhicule aérien ; au moins un rotor (3) disposé sur le corps (2) permettant le déplacement dudit corps (2) ; au moins un dispositif de coupe-fil monté sur le corps (2), apte à sectionner divers obstacles, tels que des fils électriques ou des câbles téléphoniques entrant en contact avec le corps (2) lors du déplacement, de manière à éviter tout endommagement du corps (2), ledit système comprenant : une première position (I) dans laquelle le dispositif de coupe-fil (4) est actionné par la rotation du rotor (3) autour de son propre axe, de sorte que le dispositif de coupe-fil (4) se déploie vers l'extérieur du corps (2) et coupe les obstacles entrant en contact avec le corps (2) ; **caractérisé en ce qu'**il comprend une seconde position (II) dans laquelle le dispositif de coupe-fil (4)
est déplacé depuis la première position (I) par la rotation du rotor (3) autour de son propre axe et maintenu à l'intérieur du corps (2) ; au moins un actionneur (5) assurant le déplacement du dispositif de coupe-fil (4) de la première position (I) vers la seconde position (II) et de la seconde position (II) vers la première position (I), dans laquelle,
en première position (I),
le dispositif de coupe-fil (4) se déploie vers l'extérieur du corps (2) afin de couper les obstacles entrant en contact avec le dispositif de coupe-fil (4) lorsque la vitesse de rotation du rotor (3) est supérieure à une valeur prédéterminée par le fabricant ; et, en seconde position (II), le dispositif de coupe-fil (4) est rétracté de la première position (I) et maintenu à l'intérieur du corps (2) lorsque la vitesse de rotation du rotor (3) est inférieure à ladite valeur prédéterminée par le fabricant.

2. Système de coupe-fil (1) selon la revendication 1, **caractérisé en ce qu'il** comprend au moins un capteur (6) disposé sur le corps (2), apte à acquérir des données relatives à la vitesse de rotation du rotor (3) ; une unité de commande (7) configurée pour comparer les données reçues du capteur (6) avec la vitesse de rotation du rotor (3) prédéterminée par le fabricant, et pour actionner, en fonction de ladite vitesse de rotation du rotor (3) déterminée par le fabricant, l'actionneur (5) de manière à déplacer le dispositif de coupe-fil (4) de la première position (I) vers la seconde position (II), ou inversement de la seconde position (II) vers la première position (I).

3. Système de coupe-fil (1) selon la revendication 1, **caractérisé en ce qu'il comprend** :
une poulie (8) disposée sur le corps (2) ; une courroie (9) transmettant le mouvement de rotation du rotor (3) à la poulie (8) ; une première chambre (10) contenant un fluide ; l'actionneur (5) monté sur la poulie (8) et apte à pénétrer dans la première chambre (10) sous l'effet de la force centrifuge engendrée par le mouvement de rotation de la poulie (8) ; une seconde chambre (11) permettant l'application d'une force sur une surface inférieure (S) du dispositif de coupe-fil (4) au moyen du fluide contenu dans ladite chambre ; et une conduite de transfert (12) permettant le déplacement du dispositif de coupe-fil (4) de la seconde position (II) vers la première position (I), en transférant le fluide de la première chambre (10) vers la seconde chambre (11) par le mouvement de l'actionneur (5) entrant dans la première chambre (10).

4. Système de coupe-fil (1) selon l'une quelconque des revendications précédentes, **caractérisé en ce que** le corps (2) est constitué d'un aéronef à voilure tournante ; au moins une surface de corps (13) sur laquelle le corps (2) est disposé en regard des ailes ; le dispositif de coupe-fil (4) s'étendant depuis la surface de corps (13) jusqu'aux ailes dans la première position (I).

5. Système de coupe-fil (1) selon l'une quelconque des revendications précédentes, **caractérisé en ce qu'**il comprend un connecteur (14) permettant au dispositif de coupe-fil (4) d'être fixé de manière mobile au corps (2) ; le dispositif de coupe-fil (4) se déplaçant de la première position (I) vers la seconde position (II), ou inversement, de la seconde position (II) vers la première position (I), par rotation autour du connecteur (14).

6. Système de coupe-fil (1) selon la revendication 2, **caractérisé en ce qu'**il comprend l'unité de commande (7) permettant au dispositif de coupe-fil (4) de se déplacer vers la première position (I) ou la seconde position (II), en déclenchant l'actionneur (5) à partir de la commande fournie par l'utilisateur.

7. Système de coupe-fil (1) selon l'une quelconque des revendications précédentes, **caractérisé en ce que** le dispositif de coupe-fil (4) est déplacé de la première position (I) vers la seconde position (II), ou inversement, de la seconde position (II) vers la première position (I), par rotation autour de son propre axe au moyen de l'actionneur (5).

8. Système de coupe-fil (I) selon les revendications 4 à 7, **caractérisé en ce qu'il** comprend une surface extérieure (15) disposée sur le dispositif de coupe-fil (4), ladite surface extérieure restant congruente avec la surface du corps (13) lorsque le dispositif de coupe-fil (4) se trouve dans la seconde position (II).

9. Système de coupe-fil (1) selon l'une quelconque des revendications précédentes, **caractérisé en ce que** le dispositif de coupe-fil (4) est disposé entre le corps (2) et le train d'atterrissage.

10. Système de coupe-fil (1) selon les revendications 1 à 2, **caractérisé en ce que** l'actionneur (5) est constitué d'un moteur électrique.

11. Système de coupe-fil (1) selon l'une quelconque des revendications précédentes, **caractérisé en ce que** le corps (2) est un hélicoptère.

12. Système de coupe-fil (1) selon l'une quelconque des revendications précédentes, **caractérisé en ce qu'**il comprend un déflecteur (16) disposé sur le corps (2), lequel est actionné par l'actionneur (5) afin de guider les câbles déplacés vers la première position (I) ou la seconde position (II) sur le corps (2), sans sectionner lesdits câbles.
